Europäisches Patentamt

European Patent Office

Office européen des brevets

(11) Veröffentlichungsnummer : **0 199 948**
**B1**

(12) **EUROPÄISCHE PATENTSCHRIFT**

(45) Veröffentlichungstag der Patentschrift :
**20.01.88**

(51) Int. Cl.⁴ : **B 60 T 17/00**, B 01 D 53/26

(21) Anmeldenummer : **86103475.9**

(22) Anmeldetag : **14.03.86**

(54) **Vorrichtung zum Trocknen von Druckluft.**

(30) Priorität : **22.04.85 DE 3514473**

(43) Veröffentlichungstag der Anmeldung :
**05.11.86 Patentblatt 86/45**

(45) Bekanntmachung des Hinweises auf die Patenterteilung : **20.01.88 Patentblatt 88/03**

(84) Benannte Vertragsstaaten :
**AT BE CH DE FR GB IT LI NL SE**

(56) Entgegenhaltungen :
**EP-A- 0 009 139**
**EP-A- 0 036 569**
**DE-A- 2 326 823**
**DE-A- 3 231 519**
**DE-C- 472 126**
**FR-A- 2 537 013**
**US-A- 4 306 889**

(73) Patentinhaber : **KNORR-BREMSE AG**
**Moosacher Strasse 80 Postfach 401060**
**D-8000 München 40 (DE)**

(72) Erfinder : **Gerum, Eduard, Dr.**
**Strassbergerstrasse 32**
**D-8000 München 40 (DE)**
Erfinder : **Riegel, Harald**
**Giselastrasse 31**
**D-8000 München 40 (DE)**
Erfinder : **Ruess, Leopold**
**Trollblumenstrasse 19a**
**D-8000 München 50 (DE)**
Erfinder : **Unger, Hans**
**St. Benediktstrasse 7**
**D-8044 Unterschleissheim (DE)**

## Beschreibung

Die Erfindung betrifft eine Vorrichtung zum Trocknen von Druckluft, insbesondere für Fahrzeug-Druckluftanlagen, mit einem Zweikammer-Lufttrockner, dessen Trocknungskammer mittels einer Schaltvorrichtung in Abhängigkeit vom Luftdurchsatz wechselweise in eine Trocknungs- und eine Regenerationsphase schaltbar sind, wobei für die Regenerationsphase die Durchsatzmenge der Regenerationsluft begrenzende Schaltmittel vorgesehen sind.

Eine derartige Vorrichtung ist beispielsweise aus der DE-OS 23 26 823 bekannt, bei welcher für jede Trocknungskammer ein Luftbehälter vorgesehen ist, der zum Messen der Durchsatzmenge der zu trocknenden Druckluft von dieser über ein Rückschlagventil gedrosselt aufladbar ist, bei Erreichen eines bestimmten Aufladedruckes die Schaltvorrichtung zu deren Umschaltung ansteuert und sich sodann gedüst durch die Trocknungskammer zu deren Regeneration entlädt. Die beiden Luftbehälter benötigen jedoch einen beachtlichen Einbauraum und gewährleisten keine zuverlässige Registrierung der Durchsatzmenge der getrockneten Druckluft.

Aus der DE-OS 32 44 414 ist es bekannt, mittels einer sich in Abhängigkeit von der geförderten Gesamtluftmenge verstellenden Drossel während den Trocknungsphasen ein Verhältnis der die jeweils aktive Trocknungskammer durchströmenden Gesamtluftmenge zur die andere Trocknungskammer regenerierenden, abgezweigten Teilluftmenge von stets im wesentlichen 100 zu 15 anzustreben. Die Umschaltung der Trocknungskammern wird dabei von einer aus der DE-OS 32 31 519 bekannten Zeitsteuerung mit einem elektronischen Zeitschaltglied gesteuert, welche vom Druckregler gesteuert nur die Förderzeiten des Kompressors registriert. Da jedoch der Kompressor insbesondere bei Fahrzeug-Druckluftanlagen mit sehr unterschiedlichen Antriebsdrehzahlen antreibbar ist, gewährleistet die Zeitsteuerung kein Erfassen der tatsächlich geförderten Druckluftmenge und die verstellbare Drossel kann demgemäß die jeweilige Regenerationsluftmenge nicht optimal steuern.

Aus der EU-PS 36 569 ist ein Einkammer-Lufttrockner bekannt, der ein pneumatisches Zeitsteuerglied zum Begrenzen der in den Abschaltzeiten des Kompressors fließenden Regenerierluft aufweist.

Aus der DE-PS 4 72 126 ist es für einen Zweikammer-Lufttrockner bekannt, von der Kurbelwelle eines Kompressors über ein Untersetzungsgetriebe ein nockenbetätigtes Schaltwerk anzutreiben, welches jeweils nach einer bestimmten Umdrehungszahl des Kompressors und damit in Abhängigkeit von der geförderten Druckluftmenge ein Wechseln der aktiven und der sich regenerierenden Trocknungskammer bewirkt. Es fehlen jedoch den Regeneriervorgang innerhalb der einzelnen Trocknungsphasen begrenzende Schaltmittel.

Es ist Aufgabe der Erfindung, eine Vorrichtung der eingangs genannten Art in einfacher und billiger Weise derart auszubilden, daß ein sicheres und genaues Umschalten der Trocknungskammern nach jeweiligem Erreichen einer bestimmten Druckluft-Durchsatzmenge während jeder Trocknungsphase und zugleich eine sichere und genaue, optimale Bemessung der Regenerationsluftmenge erfolgt ; dabei soll die Vorrichtung gut montierbar und wartungsarm sein.

Diese Aufgabe wird nach der Erfindung dadurch gelöst, daß die Schaltvorrichtung ein elektronisches Steuergerät aufweist, welchem Meßwerte für die Durchsatzmenge der zu trocknenden Druckluft zugeführt werden und welches nach jeweiligem Erreichen einer maximalen Durchsatzmenge für eine Trocknungsphase ein Wechselventil zum Vertauschen der trocknenden und der sich regenerierenden Trocknungskammer schaltet, und daß das Steuergerät ein Zeitglied beinhaltet, welches anschließend an ein Schalten des Wechselventils den Fluß von Regenerationsluft auf eine bestimmte, voreingestellte Zeitspanne begrenzt.

Dabei kann es nach der weiteren Erfindung vorteilhaft sein, wenn die Meßwerte für die Durchsatzmenge der zu trocknenden Druckluft einem ersten Zähler zugeführt werden, der während jeder Trocknungsphase in Abhängigkeit von den Meßwerten und ausgehend von einem Anfangs-Zählerstand zu einem End-Zählerstand zählt und bei Erreichen des End-Zählerstandes ein Schalten des Wechselventils auslöst und sich zugleich auf einen Anfangs-Zählerstand zurückstellt. Dabei kann es weiterhin zweckmäßig sein, wenn der erste Zähler das als Magnetventil ausgebildete Wechselventil über einen impulsgesteuerten Verstärker schaltet.

Falls die zu trocknende Druckluft von einem Kompressor durch einen dessen Förderung überwachenden Druckregler gefördert wird, kann es in Weiterbildung der Erfindung zweckmäßig sein, wenn dem Kompressor ein Drehzahlgeber zugeordnet und dem Druckregler ein Druckschalter nachgeschaltet ist und wenn der erste Zähler nur bei vorhandenen Druck anzeigendem Ausgangssignal des Druckschalters die vom Drehzahlgeber abgebenen, den Antriebsumdrehungen des Kompressors proportionalen Signalimpulse zählt.

In Weiterbildung der Erfindung kann das Zeitglied ein auf einer Zeitbasis zählender, zweiter Zähler sein, dessen Zählbeginn direkt oder indirekt vom Schaltvorgang des Wechselventils ausgelöst wird und der, ausgehend von einem Anfangs-Zählstand, nach Erreichen eines bestimmten End-Zählstandes das Schalten eines den Fluß der Regenerationsluft absperrenden Magnetabsperrventils auslöst und sich sodann auf den Anfangs-Zählstand zurückstellt. Dabei kann zweckmäßig der erste Zähler bei Erreichen seines End-Zählerstandes den Zählbeginn des zweiten Zählers und zugleich über einen Verstärker ein Öffnen des Magnetabsperrventils auslösen und der zweite Zähler bei Erreichen seines End-Zählerstandes den Verstärker zum Schließen des Magnetabsperrventils ansteuern.

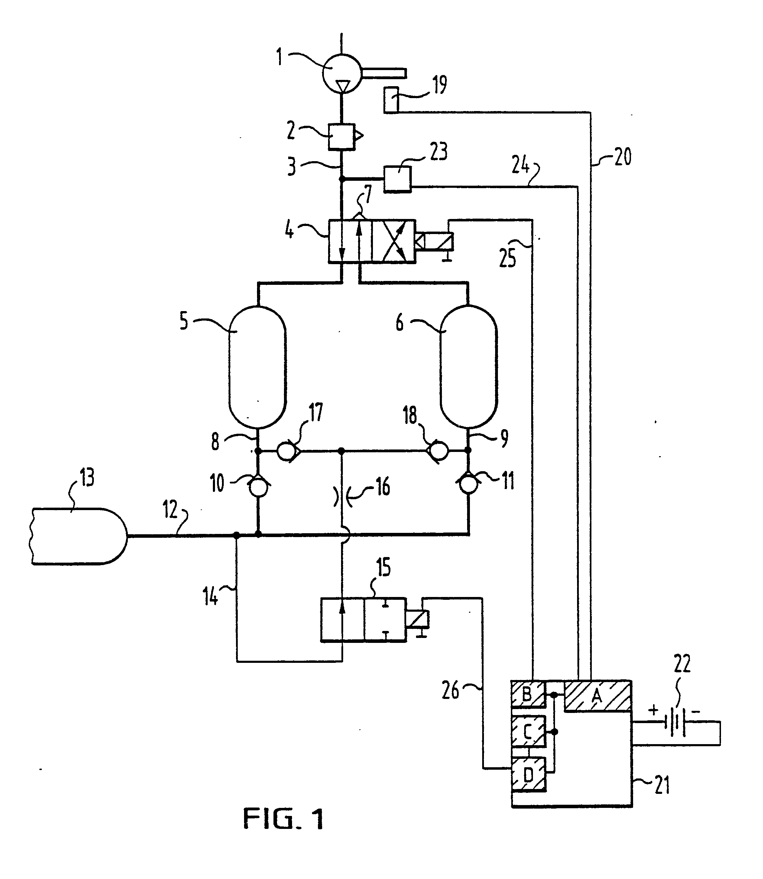

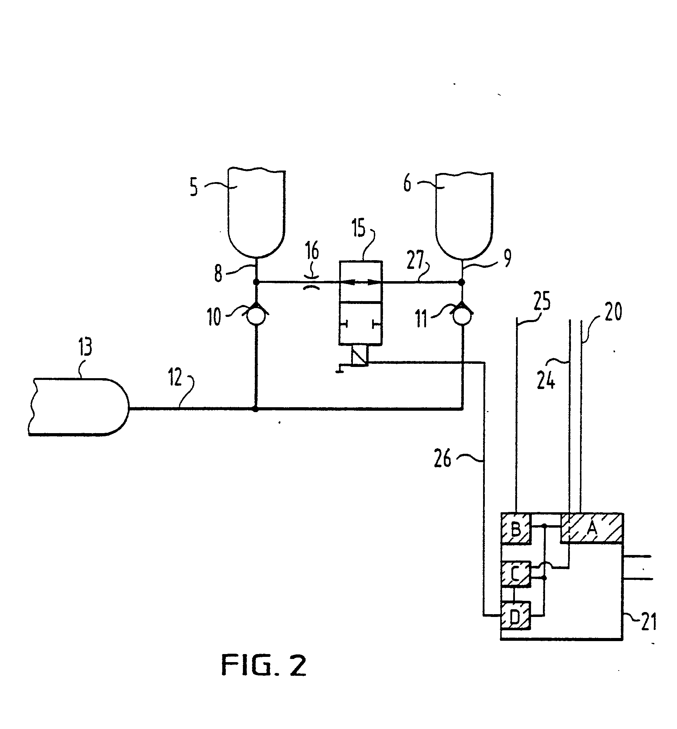

In der Zeichnung Fig. 1 ist ein Ausführungsbeispiel für eine nach der Erfindung ausgebildete Vorrichtung schematisch dargestellt, und in Fig. 2 ist ein Ausschnitt aus einer geänderten Ausführungsform gezeigt.

Nach Fig. 1 fördert ein Kompressor 1 Druckluft durch einen seine Förderung überwachenden Druckregler 2 in eine Rohrleitung 3, welche über ein Wechselventil 4 wechselweise an eine von zwei Trocknungskammern 5 oder 6 anschließbar ist ; nach Fig. 1 befindet sich die Rohrleitung 3 gerade in Verbindung mit der Trocknungskammer 5. Die jeweils gerade nicht mit der Rohrleitung 3 verbundene Trocknungskammer 6 bzw. 5 ist durch das Wechselventil 4 mit einer Entlüftung 7 zur Atmosphäre verbunden. Der Druckregler 2 verbindet wie üblich den Druckanschluß des Kompressors 1 in Abhängigkeit von der in der Rohrleitung 3 oder in der nachgeordneten Druckluftanlage herrschenden Druckhöhe mit der Rohrleitung 3 oder der Atmosphäre. Das Wechselventil 4 ist als Magnetventil ausgebildet. Die wie üblich mit einem geeigneten Granulat gefüllten Trocknungskammern 5 und 6 sind gegenüberliegend zu ihren Verbindungen zum Wechselventil 4 mit Ausgängen 8 bzw. 9 versehen, die über je ein in dieser Strömungsrichtung öffnendes Rückschlagventil 10 bzw. 11 an eine Rohrleitung 12 angeschlossen sind, welche zum Vertraucher für die getrocknete Druckluft, nach Fig. 1 einen Vorratsluftbehälter 13, führt. An den Vorratsluftbehälter 13 kann beispielsweise die nicht dargestellte Druckluftanlage, insbesondere Druckluftbremsanlage eines Fahrzeuges angeschlossen sein. Von der Rohrleitung 12 zweigt eine Zweigleitung 14 ab, welche über ein Magnetabsperrventil 15 und eine Düse 16 sowie über je ein in dieser Strömungsrichtung öffnendes Rückschlagventil 17 bzw. 18 zu den Ausgängen 8 und 9 führt.

Der Kompressor 1 ist mit einem Drehzahlgeber 19 ausgestattet, der in eine elektrische Signalleitung 20 der Drehzahl des Kompressors 1 entsprechende Spannungsimpulse einspeist ; beispielsweise kann der Drehzahlgeber 19 für jede Umdrehung der Kurbelwelle des Kompressors 1 in die Signalleitung 20 einen Impuls einspeisen. Die Signalleitung 20 führt zu einem elektronischen Steuergerät 21 und in diesem zu einem ersten Zähler A. Das elektronische Steuergerät 21 wird aus einer Stromquelle 22, beispielsweise einer Fahrzeugbatterie, mit Strom versorgt. An die Rohrleitung 3 ist zwischen dem Druckregler 2 und dem Wechselventil 4 ein Druckschalter 23 angeschlossen, der bei vorhandenem Druck in der Rohrleitung 3 in eine elektrische Signalleitung 24 ein Signal einspeist. Auch die Signalleitung 24 führt zum ersten Zähler A im Steuergerät 21. Der erste Zähler A ist im Steuergerät 21 mit einem impulsgesteuerten Verstärker B verbunden, von welchem eine elektrische Leitung 25 zur Ansteuerung des Wechselventils 4 ausgeht. Weiterhin ist im Steuergerät ein zweiter Zähler C untergebracht, der vom ersten Zähler A ansteuerbar ist. Ein weiterer Verstärker D ist von beiden Zahlern A und C her ansteuerbar, vom Verstärker D geht eine elektrische Leitung 26 aus, welche zum Magnetabsperrventil 15 führt.

Der erste Zähler A zählt die vom Drehzahlgeber 19 ausgehenden, der Drehzahl des Kompressors 1 proportionalen Impulse nur, wenn in der Signalleitung 24 ein einen vorhandenen Druck in der Rohrleitung 3 anzeigendes Signal ansteht ; der erste Zähler A geht dabei von einem Anfangs-Zählerstand, beispielsweise Null, aus und zählt bis zu einem bestimmten, festgelegten End-Zählerstand. Wird zwischenzeitlich die Rohrleitung 3 drucklos und fällt somit das in der Signalleitung 24 anstehende Signal aus, so unterbricht der erste Zähler A den Zählvorgang unter Speicherung des erreichten Zählerstandes, bei Wiederkehr des Druckes in der Rohrleitung 3 und damit des diesem entsprechenden Signales in der Signalleitung 24 zählt der erste Zähler A weiter. Bei Erreichen des End-Zählstandes gibt der erste Zähler A einen Impuls an die beiden Verstärker B und D sowie den zweiten Zähler C ab. Das Erreichen des End-Zählerstandes im ersten Zähler A zeigt an, daß vom Kompressor 1 eine bestimmte Luftmenge durch das während des ganzen Zählvorganges eine bestimmte Schaltstellung beibehaltende Wechselventil 4 und eine der Trocknungskammer 5 oder 6, nach Fig. 1 die Trocknungskammer 5, zur Leitung 12 und dem Vorratsluftbehälter 13 gefördert wurde. Der vom ersten Zähler A zum Verstärker B gelangende Impuls steuert den Verstärker B derart um, daß er durch die Leitung 25 eine Umschaltung des Wechselventils 7 bewirkt, so daß nunmehr die andere Trocknungskammer 6 bzw. 5 an die Rohrleitung 3 angeschlossen wird. Zugleich bewirkt das vom ersten Zähler A ausgehende Impulssignal, daß der zweite Zähler C, ausgehend von einem Anfangs-Zählerstand, beispielsweise ebenfalls Null, auf einer Zeitbasis zu zählen beginnt und daß, parallel hierzu, der Verstärker D durch die Leitung 26 das zuvor in Schließstellung befindliche Magnetabsperrventil 15 in die in Fig. 1 dargestellte Öffnungsstellung steuert. Ebenfalls gleichzeitig hierzu stellt sich der erste Zähler A auf seinen Anfangs-Zählerstand zurück und beginnt bei vorhandenem Druck in der Rohrleitung 3 erneut zu zählen. Aus der Rohrleitung 12 strömt Druckluft durch das Magnetabsperrventil 15 und die Düse 16 sowie durch eines der Rückschlagventile 17 oder 18 zu jeweils derjenigen Trocknungskammer 6 bzw. 5, welche durch das Wechselventil 4 mit der Entlüftung 7 verbunden ist. Die bereits getrocknete Druckluft aus dem Vorratsbehälter 13 entspannt sich dabei in der Düse 16, wodurch sie weiter getrocknet wird, regeneriert die jeweils von ihr durchströmte Trocknungskammer 6 bzw. 5 und strömt durch die Entlüftung 7 zur Atmosphäre ab. Sobald der zweite Zähler C einen bestimmten End-Zählstand erreicht, was dem Ablauf einer bestimmten Zeitspanne entspricht, steuert er den Verstärker D derart an, daß dieser durch die Leitung 26 das Magnetabsperrventil 15 zum Schließen veranlaßt. Damit wird der Fluß der Regenerationsluft durch die Zweigleitung 14, die Düse 16 und die jeweils mit der Entlüftung 7 verbundene Trocknungskammer 6 bzw. 5 unterbrochen. Die Größe des End-Zählstandes für den zweiten Zähler E wird derart festgelegt, daß die während des Zählvorganges des zweiten Zählers C die sich regenerierende Trocknungskammer 6 bzw. 5 durchströmende Regenerierluft zum vollständigen Regenerieren dieser Trocknungskammer gerade ausreicht. Nach vollständiger Regenerierung wird somit zur Drucklufterspamis der Regenerierluftstrom sofort gesperrt. Der erste Zähler A zählt währenddessen, gegebenenfalls von Zeitspannen mit druckloser Rohrleitung 3 unterbrochen, weiter, bis er seinen End-Zählerstand erreicht, was bedeutet, daß eine die Trocknungskapazität der gerade aktiven Trocknungskammer 5 bzw. 6 erschöpfende Druckluftmenge diese Trocknungskammer 5 bzw. 6 durchströmt hat und vom Kompressor 1 zum Vorratsluftbehälter 13 gefördert worden ist. Der erste Zähler A bewirkt sodann über den Verstärker B wiederum ein Umsteuern des Wechselventiles 4, einen erneuten Zählbeginn des zweiten Zählers C, der sich zwischenzeitlich, nach dem Schließen des Magnetabsperrventils 15, auf seinen Anfangs-Zählerstand zurückgestellt hat, und über den zweiten Verstärker D ein erneutes Öffnen des Magnetabsperrventiles 15, woraufhin sich der erste Zähler A wiederum auf einen Anfangs-Zählerstand zurückstellt. Damit ist ein Trocknungszyklus beendet.

Der erste Zähler A zählt also entsprechend der Druckluftförderung durch den Kompressor 1 und bewirkt nach einer geförderten Luftmenge, welche die Trocknungskapazität der Trocknungskammer 5 oder 6 erschöpfen kann, einen Austausch der jeweils aktiven, trocknenden Trocknungskammer 5 bzw. 6, der End-Zählerstand ist dementsprechend auf die Trocknungskapazität der Trocknungskammern 5 und 6 unter Berücksichtigung des Impulsabgabeverhaltens des Drehzahlgebers 19 abzustimmen. Der Druckschalter 23 kann hierbei als einfacher Ein-Ausschalter für das in die Signalleitung 24 in Abhängigkeit vom Druckzustand der Rohrleitung 3 einzuspeisende Signal ausgebildet sein. In Abänderung hierzu ist es zur Steigerung der Schaltgenauigkeit jedoch auch möglich, den Druckschalter 23 derart auszubilden, daß er in die Signalleitung 24 ein der jeweiligen Höhe des Druckes in der Rohrleitung 3 proportionales Signal einspeist, wobei dieses der jeweiligen Druckhöhe proportionale Signal das Zählverhalten des ersten Zählers A beispielsweise durch Variieren des zu erreichenden End-Zählerstandes zum Berücksichtigen der Förderdruckhöhe des Kompressors 1 veranlaßt ; hierdurch wird erreicht, daß druckabhängig die die jeweils aktive Trocknungskammer 5 durchströmende Druckluftmenge während jeder Trocknungsphase genauer im ersten Zähler A erfaßt und das Wechselventil 7 somit exakter nach bestimmten, geförderten Luftmengen geschaltet wird. Der erste Zähler A kann auch zusätzlich in nicht dargestellter Weise von der Luftfeuchtigkeit der zu fördernden oder der in die Rohrleitung 3 geförderten Luft angesteuert werden, so daß auch diese Luftfeuchtigkeit zum Bestimmen des Umschaltzeitpunktes des Wechselventils 4 und damit zum Beenden einer Trocknungsphase berücksichtigt wird.

Der Druckschalter 23 kann abweichend auch an die Rohrleitung zwischen dem Kompressor 1 und dem Druckregler 2 angeschlossen sein.

Die Zähler A und C können unabhängig voneinander beliebig, vorwärtsoder rückwärtszählend, ausgebildet sein.

Zum Verringern des pneumatischen Schaltungsaufwandes ist es abweichend zu Fig. 1 mit Entnahme der Regenerationsluft aus dem Vorratsluftbehälter 13 auch möglich, die Regenerierluft für die jeweils zu regeneriernde Trocknungskammer unmittelbar dem Ausgang 8 bzw. 9 der jeweils aktiven, trocknenden Trocknungskammer 5 oder 6 zu entnehmen. Hierzu sind die Ausgänge 8 und 9 durch eine Rohrleitung 27 miteinander zu verbinden, wobei in die Rohrleitung 27 in Serie zueinander das Magnetabsperrventil 15 sowie die Düse 16 einzuschalten sind. Im Steuergerät 21 ist dabei der zweite Zähler C zusätzlich von der Signalführung in der Signalleitung 24 anzusteuern, derart, daß er nur bei vorhandenem Druck in der Rohrleitung 3 zählt. Hierdurch wird sichergestellt, daß bei Unterbrechung der Druckluftförderung des Kompressors 1 durch den Druckregler 2 der zweite Zähler C während Regenerationsphasen stehen bleibt und nicht fälschlich weiterzählt. Die zu regenerierende Trocknungskammer 5 wird also unabhängig von Druckluft-Förderungsunterbrechungen von einer zu ihrer Regeneration optimal ausreichenden Regenerierluftmenge durchströmt. Im übrigen entspricht der Aufbau und die Funktionsweise der Vorrichtung nach Fig. 2 derjenigen nach Fig. 1, es erübrigen sich somit weitere Erläuterungen. Es ist ersichtlich, daß bei der Ausführung nach Fig. 2 zwei Rückschlagventile einsparbar sind.

Bezugszeichenliste

| 1 | Kompressor |
|---|---|
| 2 | Druckregler |
| 3 | Rohrleitung |
| 4 | Wechselventil |
| 5 | Trocknungskammer |
| 6 | Trocknungskammer |
| 7 | Entlüftung |
| 8 | Ausgang |
| 9 | Ausgang |
| 10 | Rückschlagventil |
| 11 | Rückschlagventil |
| 12 | Rohrleitung |
| 13 | Vorratsluftbehälter |
| 14 | Zweigleitung |
| 15 | Magnetabsperrventil |
| 16 | Düse |
| 17 | Rückschlagventil |
| 18 | Rückschlagventil |
| 19 | Drehzahlgeber |

20  Signalleitung
21  Steuergerät
22  Stromquelle
23  Druckschalter
24  Signalleitung
25  Leitung
26  Leitung
27  Rohrleitung
A   erster Zähler
B   Verstärker
C   zweiter Zähler
D   Verstärker

**Patentansprüche**

1. Vorrichtung zum Trocknen von Druckluft, insbesondere für Fahrzeug-Druckluftanlagen, mit einem Zweikammer-Lufttrockner, dessen Trocknungskammern (5, 6) mittels einer Schaltvorrichtung in Abhängigkeit vom Luftdurchsatz wechselweise in eine Trocknungs- und eine Regenerationsphase schaltbar sind, wobei für die Regenerationsphase die Durchsatzmenge der Regenerationsluft begrenzende Schaltmittel vorgesehen sind, dadurch gekennzeichnet, daß die Schaltvorrichtung ein elektronisches Steuergerät (21) aufweist, welchem Meßwerte für die Durchsatzmenge der zu trocknenden Druckluft zugeführt werden und welches nach jeweiligem Erreichen einer maximalen Durchsatzmenge für eine Trocknungsphase ein Wechselventil (4) zum Vertauschen der trocknenden und der sich regenerierenden Trocknungskammer (5, 6) schaltet, und daß das Steuergerät (21) ein Zeitglied (C) beinhaltet, welches anschließend an ein Schalten des Wechselventils (4) den Fluß von Regenerationsluft auf eine bestimmte, voreingestellte Zeitspanne begrenzt.

2. Vorrichtung nach Anspruch 1, dadurch gekennzeichnet, daß die Meßwerte für die Durchsatzmenge der zu trocknenden Druckluft einem ersten Zähler (A) zugeführt werden, der während jeder Trocknungsphase in Abhängigkeit von den Meßwerten und ausgehend von einem Anfangs-Zählerstand zu einem End-Zählerstand zählt und bei Erreichen des End-Zählerstandes ein Schalten des Wechselventils (4) auslöst und sich zugleich auf seinen Anfangs-Zählerstand zurückstellt.

3. Vorrichtung nach Anspruch 2, dadurch gekennzeichnet, daß der erste Zähler (A) das als Magnetventil ausgebildete Wechselventil (4) über einen impulsgesteuerten Verstärker (B) schaltet.

4. Vorrichtung nach Anspruch 2 oder 3, wobei die zu trocknende Druckluft von einem Kompressor (1) durch einen dessen Förderung überwachenden Druckregler (2) gefördert wird, dadurch gekennzeichnet, daß dem Kompressor (1) ein Drehzahlgeber (19) zugeordnet und dem Druckregler (2) ein Druckschalter (23) nachgeschaltet ist und daß der erste Zähler (A) nur bei vorhandenen Druck anzeigendem Ausgangssignal des Druckschalters (23) die vom Drehzahlgeber (19) abgegebenen, den Antriebsumdrehungen des Kompressors (1) proportionalen Signalimpulse zählt.

5. Vorrichtung nach den Ansprüchen 1 bis 3 oder 1 bis 4, dadurch gekennzeichnet, daß das Zeitglied ein auf einer Zeitbasis zählender zweiter Zähler (C) ist, dessen Zählbeginn direkt oder indirekt vom Schaltvorgang des Wechselventils (4) ausgelöst wird und der, ausgehend von einem Anfangs-Zählstand, nach Erreichen eines bestimmten End-Zählstandes das Schalten eines den Fluß der Regenerationsluft absperrenden Magnetabsperrventils (15) auslöst und sich sodann auf den Anfangs-Zählstand zurückstellt.

6. Vorrichtung nach Anspruch 5, dadurch gekennzeichnet, daß der erste Zähler (A) bei Erreichen seines End-Zählerstandes den Zählbeginn des zweiten Zählers (C) und zugleich über einen Verstärker (D) ein Öffnen des Magnetabsperrventils (15) auslöst, und daß der zweite Zähler (C) bei Erreichen seines End-Zählerstandes den Verstärker (D) zum Schließen des Magnetabsperrventils (15) ansteuert.

**Claims**

1. Compressed-air desiccator, particularly for compressed-air systems in vehicles, comprising a dual-chamber air dryer whose drying chambers (5, 6) can be switched alternately to a drying phase and a regeneration phase by a switching device according to air throughput, switching means which limit the volume of regeneration air throughput being provided for the regeneration phase, wherein the switching device has an electronic controller (21) which receives measurements of the volume of compressed air to be dried and which, when a certain maximum throughput volume for a drying phase is reached, switches a changeover valve (4) to swap from the drying to the regenerative drying chamber (5, 6), and wherein the controller (21) contains a timer which, after the changeover valve (4) has switched, limits the flow of regeneration air to a certain present interval.

2. Desiccator as defined in Claim 1, wherein the measured values of the volume of compressed air to be dried are delivered to a first counter (A) which, during every drying phase, counts from an initial counter reading to a final counter reading according to the measured values, and which, when the final counter reading is reached, causes the changeover valve (4) to switch over and simultaneously resets itself to its initial counter reading.

3. Desiccator as defined in Claim 2, wherein the changeover valve (4), which is designed as a magnet valve, is switched by the first counter (A) via a pulse-driven amplifier (B).

4. Desiccator as defined in Claim 2 or 3, the compressed air to be dried being delivered by a compressor (1) through a pressure regulator (2) monitoring the delivery of the said compressor, wherein the compressor (1) is assigned a speed sensor (19) and the pressure regulator (2) is followed by a pressure switch (23), and wherein the signal pulses which are delivered by the speed sensor (19) and which are proportional to the driving revolutions of the compressor (1) are only counted by the first counter (A) when the output signal from the pressure switch (23) indicates that pressure is present.

5. Desiccator as defined in Claims 1 to 3 or 1 to 4, wherein the timer is a second counter (C) working on a time basis, which second counter (C) is started counting directly or indirectly by the switching of the changeover valve (4) and which, when, relative to an initial counter reading, a certain final counter reading is reached, first drives a magnet shut-off valve stopping the flow of regeneration air and then resets itself to the initial counter reading.

6. Desiccator as defined in Claim 5, wherein, when the first counter (A) reaches its final counter reading, it starts the second counter (C) counting and simultaneously causes the magnet shut-off valve (15) to open via an amplifier (D), and wherein, when the second counter (C) reaches its final counter reading, it causes the amplifier (D) to close the magnet shut-off valve (15).


## Revendications

1. Dispositif pour le séchage d'air comprimé, notamment pour des installations à air comprimé de véhicules, comprenant un sécheur d'air à deux chambres dont les chambres (5, 6) peuvent travailler, en fonction du débit d'air, en phases de séchage ou de régénération, commutables moyennant un dispositif approprié, des moyens étant prévus pour limiter, en phase de régénération, le débit d'air de régénération, caractérisé par le fait que le dispositif commandant la commutation comprend un appareil de commande électronique (21) qui reçoit des valeurs de mesure relatives au débit d'air à sécher, et qui, lorsque le débit d'air en phase de séchage a atteint son maximum, agit sur une valve (4) provoquant la commutation des chambres (5, 6) pour le séchage et la régénération, et que l'appareil de commande (21) comporte une base de temps (C) limitant, après la commutation de la valve (4), l'écoulement du flux d'air de régénération à une durée préréglée.

2. Dispositif suivant la revendication 1, caractérisé par le fait que les valeurs de mesure relatives au débit d'air comprimé à sécher arrivent dans un premier compteur (A) qui, pendant toute phase de séchage, commence à compter en fonction des valeurs de mesure et en partant d'un état initial, jusqu'à un état final et, arrivé à cet état final, provoque la commutation de la valve (4), et revient à son état initial.

3. Dispositif suivant la revendication 2, caractérisé par le fait que le premier compteur (A) agit par l'intermédiaire d'un amplificateur (B) commandé par des impulsions, sur la valve (4) qui est une électrovalve.

4. Dispositif suivant la revendication 2 ou 3, l'air à sécher étant refoulé par un compresseur (1) dont l'action est surveillée par un régulateur de pression (2), caractérisé par le fait que le compresseur (1) est combiné avec une dynamo tachymétrique (19) et que le régulateur de pression (2) est suivi d'un manostat (23), et que le premier compteur (A) ne compte les impulsions émises par la dynamo tachymétrique (19) et proportionnelles au nombre de tours du compresseur (1) qu'en présence d'un signal émis par le manostat (23) sous l'effet d'une pression.

5. Dispositif suivant les revendications 1 à 3 ou 1 à 4, caractérisé par le fait que la base de temps est un deuxième compteur (C) dont la mise en marche est commandée directement ou indirectement par la commutation de la valve (4) et qui, en partant d'un état initial, provoque, au moment où il atteint son état final, la commande d'une électrovalve d'arrêt (15) coupant le flux d'air de régénération, et retourne ensuite à son état initial.

6. Dispositif suivant la revendication 5, caractérisé par le fait que le premier compteur (A) arrivé à son état final commande la mise en marche du deuxième compteur (C) et en même temps, par l'intermédiaire d'un amplificateur (D), l'ouverture de l'électrovalve d'arrêt (15), et que le deuxième compteur (C), à son état final, agit sur l'amplificateur (D) pour provoquer la fermeture de l'électrovalve d'arrêt (15).

**FIG. 1**

FIG. 2